# EUROPÄISCHE PATENTSCHRIFT

(11) **EP 4 331 911 B1**
(45) Veröffentlichungstag und Bekanntmachung des Hinweises auf die Patenterteilung: **22.01.2025**
(21) Anmeldenummer: 23184042.2
(22) Anmeldetag: 07.07.2023
(51) Int. Cl.: B60P 1/44, F16P 3/14

(54) **HUBLADEBÜHNE, VERFAHREN ZUM BETREIBEN DER HUBLADEBÜHNE, KRAFTFAHRZEUG UND ANHÄNGEEINRICHTUNG**
LOADING PLATFORM, METHOD FOR OPERATING THE LOADING PLATFORM, MOTOR VEHICLE AND TRAILER DEVICE
HAYON ÉLÉVATEUR, PROCÉDÉ DE FONCTIONNEMENT DU HAYON ÉLÉVATEUR, VÉHICULE AUTOMOBILE ET DISPOSITIF D'ATTELAGE

(30) Priorität: 01.09.2022 DE 102022122205
(43) Veröffentlichungstag der Anmeldung: 06.03.2024
(73) Patentinhaber: Bär Management- und Beteiligungsgesellschaft mbH, 74078 Heilbronn (DE)
(72) Erfinder: Bär, Tobias, 74078 Heilbronn (DE); Förch, Peter, 67435 Neustadt an der Weinstraße (DE)
(74) Vertreter: DREISS Patentanwälte PartG mbB

(56) Entgegenhaltungen:
- DE-A1- 102008 060 767
- DE-B3- 102019 117 455
- JP-B1- 6 601 930
- US-B2- 10 875 482

## Beschreibung

Die Erfindung betrifft eine Hubladebühne für ein Kraftfahrzeug, ein Verfahren zum Betreiben der Hubladebühne, ein Kraftfahrzeug und eine Anhängeeinrichtung.

DE 10 2008 060 767 A1 betrifft eine Schutzvorrichtung für eine Beladungsanordnung eines Transportfahrzeugs sowie ein Verfahren zu deren Betrieb, wobei die Beladungsanordnung eine Ladebordwand oder eine absenkbare Ladefläche umfasst. Am Transportfahrzeug und an der Beladungsanordnung des Transportfahrzeugs ist ein Lasersensor angeordnet, um Personen und Gegenstände, welche sich in einem vorgegebenen Gefahrenbereich befinden, zu erkennen. Eine Warnmeldung wird generiert und ein Antriebsmechanismus der Beladungsanordnung wird sofort gestoppt, wenn mittels des Lasersensors eine Person oder ein Gegenstand in dem vorgegebenen Gefahrenbereich erkannt wird.

DE 10 2019 117 455 B3 offenbart ein Verfahren zur Überwachung einer Hubladebühne. Eine Recheneinrichtung ist zum Erfassen eines Bildes der Kamera ausgebildet und zum Ansteuern der Mensch-Maschine-Schnittstelle und zur Ausgabe eines Warnsignals. Eine erste Repräsentation eines Randbereichs einer Tragfläche der Hubladebühne definiert eine Gefahrenzone. Die Recheneinrichtung ist ausgebildet, die Mensch-Maschine-Schnittstelle zur Ausgabe des Warnsignals anzusteuern.

JP 6 601930 B1 offenbart eine weitere Hubladebühne.

Die Druckschrift DE 10 2019 105 787 A1 offenbart ein Kraftfahrzeug mit einer ferngesteuerten bewegbaren Hubladebühne. Das Kraftfahrzeug umfasst eine erste Sensoreinrichtung und zumindest eine zweite Sensoreinrichtung, die als Kameraeinrichtung ausgebildet sein können. Die erste Sensoreinrichtung ist an einem oberen hintern Endbereich des Kraftfahrzeugs angeordnet, die zweite Sensoreinrichtung weist einen Erfassungsbereich auf, der einen Seitenbereich des Kraftfahrzeugs erfasst. Eine Sicherungseinrichtung ist ausgebildet auf Basis von empfangenen Sensordaten der ersten Sensoreinrichtung uns zweiten Sensoreinrichtung zu bestimmen, ob ein Notstopp der Hubladebühne einzuleiten ist.

Wünschenswert ist es, eine demgegenüber verbesserte und vereinfachte Überwachung einer Hubladebühne bereitzustellen.

Diese Aufgabe wird durch eine Hubladebühne gelöst, umfassend eine Plattform; zumindest eine Kamera, die ausgebildet ist, ein Bild eines Sichtbereichs der Kamera zu erfassen, wobei die Kamera derart angeordnet ist, dass das Bild zumindest teilweise einen Bereich unterhalb der Plattform abbildet, wenn sich die Plattform in einer Schwenkposition im Sichtbereich der Kamera befindet; eine Auswerteeinrichtung, die ausgebildet ist, abhängig von dem erfassten Bild ein Signal bereitzustellen, das ein Vorhandensein zumindest eines Teils eines Objekts, insbesondere einer Person, in einem Gefahrenbereich charakterisiert; und eine Ansteuereinrichtung, die ausgebildet ist, abhängig vom Signal mittels eines Ansteuersignals eine Bewegung der Plattform zu stoppen oder zu unterbinden. Dadurch ist eine kamerabasierte Gefahrenerkennung möglich, die einen Bewegungsbereich der Hubladebühne unterhalb der Plattform überwachen kann. Dieser Bewegungsbereich birgt, insbesondere bei einem Öffnen der Plattform, ein erhöhtes Gefahrenpotential. Zudem ist ein konstruktiver Aufwand beim Anbringen der Kamera reduziert. Des Weiteren ist lediglich ein einzelner Datenstrom in Form des Bildes der Kamera auszuwerten, wodurch eine Mindestvoraussetzung an Rechenleistung der Auswertungseinrichtung gering ist.

Vorzugsweise ist die Kamera in einem Bereich um eine Antriebeinrichtung der Hubladebühne angeordnet oder anordenbar. Dadurch ist möglich, die Kamera einfach und schnell zu montieren und zu warten, da diese in einer Arbeitshöhe angeordnet ist, bei der es keinerlei Hilfsmittel zum Erreichen bedarf.

Vorzugsweise umfasst die Plattform eine Arbeitsfläche, wobei die Hubladeplattform zumindest eine weitere Kamera umfasst, die ausgebildet ist ein weiteres Bild eines Sichtbereichs der weitern Kamera zu erfassen, wobei die weitere Kamera derart angeordnet ist, dass das weitere Bild zumindest teilweise einen Bereich abbildet, der die Arbeitsfläche der Plattform umfasst, wenn sich die Plattform in der Schwenkposition in dem Sichtbereich der weiteren Kamera befindet, und/oder wobei die Auswerteeinrichtung ausgebildet ist, die Arbeitsfläche der Plattform aus dem Gefahrenbereich auszublenden. Somit wird auch ein Bereich oberhalb der Plattform überwacht. Zudem kann sich beispielsweise dennoch ein Bediener während der Bewegung der Plattform auf der Arbeitsfläche befinden, ohne dass die Bewegung der Plattform gestoppt oder unterbunden wird. Somit ist der Bediener in seiner Arbeit nicht eingeschränkt.

Vorzugsweise ist die weitere Kamera an einem Aufbau des Kraftfahrzeugs angeordnet oder anordenbar. Die Kamera ermöglicht durch diese Anordnung eine weite Abdeckung eines Bereichs um die Hubladebühne, ohne dabei eine Gesamthöhe des Kraftfahrzeugs wesentlich zu beeinflussen.

Die Hubladebühne nach einem der Ansprüche 3 oder 4, wobei sich der Sichtbereich der Kamera und der Sichtbereich der weiteren Kamera zumindest teilweise überschneiden und die Auswerteeinrichtung ausgebildet ist, abhängig von dem erfassten Bild und abhängig von dem erfassten weiteren Bild das Signal bereitzustellen, das das Vorhandensein des Objekts, insbesondere der Person, in dem Gefahrenbereich charakterisiert, und
dass die Ansteuereinrichtung ausgebildet ist, abhängig vom Signal die Bewegung der Plattform mittels Ansteuersignals zu stoppen oder zu unterbinden. Dadurch wird die kamerabasierte Gefahrenerkennung verbessert und ein Betreiben der Hubladebühne sicherer, da auch auf Gefahrensituationen oberhalb der Plattform reagiert wird. Insbesondere birgt der Bereich, der die Arbeitsfläche der Plattform umfasst ein erhöhtes Gefahrenpotential bei einem Schließen der Plattform. Dieses Gefahrenpotential wird durch ein Auswerten des weiteren Bildes der weiteren Kamera reduziert.

Vorzugsweise ist die Ansteuereinrichtung ausgebildet, eine manuellen Bedienung eines Bedieners zu erkennen und abhängig vom Signal und der manuellen Bedienung die Bewegung der Plattform mittels des Ansteuersignals fortzusetzen oder einzuleiten. Dadurch ist der Betrieb der Hubladebühne sicherer gestaltet, da der Bediener durch die manuelle Bedienung bewusst die Bewegung der Plattform fortsetzen oder einleiten muss.

Vorzugsweise ist die Ansteuereinrichtung ausgebildet eine manuelle Bedienung eines Bedieners zu erkennen und abhängig von der manuellen Bedienung die Bewegung der Plattform mittels des Ansteuersignals fortzusetzen oder einzuleiten, wenn das zumindest eine Objekt, insbesondere die Person, in dem Gefahrenbereich vorhanden ist. Dadurch kann eine mögliche Fehlfunktion der kamerabasierten Gefahrenerkennung der umgangen werden.

Erfindungsgemäß ist die Ansteuereinrichtung ausgebildet, mittels einer automatisierten Bedienung die Bewegung der Plattform mittels des Ansteuersignals fortzusetzen oder einzuleiten, wenn das zumindest eine Objekt, insbesondere die Person, aus dem Gefahrenbereich entfernt ist. Durch die automatisierte Bedienung ist die kamerabasierte Gefahrenerkennung auch beispielsweise in vollautomatisierten Be- und Entladestationen anwendbar.

Vorzugsweise ist die Auswerteeinrichtung ausgebildet, abhängig von dem erfassten Bild und/oder dem erfassten weiteren Bild ein Warnsignal bereit zu stellen, das ein Vorhandensein des Objekts, insbesondere der Person, in einem Warnbereich charakterisiert. Durch den Warnbereich und das Warnsignal ist es möglich beispielsweise den Bediener oder einen Dritten über eine potentiell, von der Hubladebühne ausgehende, Gefahrensituation in Kenntnis zu setzen.

Vorzugsweise grenzt der Warnbereich an den Gefahrenbereich an. Durch die Anordnung des Warnbereichs an den Gefahrenbereich kann der Bediener oder der Dritte besser einschätzen ob tatsächlich eine Gefahrensituation entsteht.

Vorzugsweise ist die Auswerteeinrichtung ausgebildet, eine Ausdehnung des Gefahrenbereichs an eine Schwenkposition der Plattform anzupassen. Durch die Anpassung des Gefahrenbereichs an die Schwenkposition der Plattform werden unnötige Unterbrechungen oder Unterbindungen der Bewegung der Plattform verringert, was den Betrieb der Hubladebühne allgemeinen verbessert.

Das Verfahren zum Betreiben der Hubladebühne für das Kraftfahrzeug, insbesondere das Nutzfahrzeug, umfasst, dass mittels einer Kamera ein Bild eines Sichtbereichs erfasst wird, das zumindest teilweise ein Bereich unterhalb einer Plattform der Hubladebühne abbildet, wenn sich die Plattform in einer Schwenkposition im Sichtbereich der Kamera befindet, wobei mittels einer Auswerteeinrichtung abhängig von dem erfassten Bild ein Signal bereitgestellt wird, das ein Vorhandensein zumindest eines Teils eines Objekts, insbesondere einer Person, in einem Gefahrenbereich charakterisiert, und wobei mittels einer Ansteuereinrichtung abhängig vom Signal eine Bewegung die Plattform durch ein Ansteuersignal gestoppt wird oder unterbunden wird.

Vorzugsweise umfasst die Plattform eine Arbeitsfläche, wobei mittels einer weiteren Kamera ein weiteres Bild eines Sichtbereichs der weiteren Kamera erfasst wird, das zumindest teilweise ein Bereich abbildet, der die Arbeitsfläche der Plattform umfasst, wenn sich die Plattform in der Schwenkposition in dem Sichtbereich der weiteren Kamera befindet, und/oder wobei mittels der Auswerteeinrichtung die Arbeitsfläche der Plattform aus dem Gefahrenbereich ausgeblendet wird.

Vorzugsweise überschneidern sich der Sichtbereich der Kamera und der Sichtbereich der weiteren Kamera zumindest teilweise und mittels der Auswerteeinrichtung wird abhängig von dem erfassten Bild und dem erfassten weiteren Bild das Signal bereitgestellt, das das Vorhandensein des Objekts, insbesondere der Person, in dem Gefahrenbereich charakterisiert, und dass mittels der Ansteuereinrichtung abhängig vom Signal die Bewegung der Plattform durch das Ansteuersignal gestoppt wird oder unterbunden wird.

Vorzugsweise wird mittels der Ansteuereinrichtung eine manuelle Bedienung eines Bedieners erkannt und abhängig vom Signal und der manuellen Bedienung wird die Bewegung der Plattform durch das Ansteuersignal fortgesetzt oder eingeleitet.

Vorzugsweise wird mittels der Ansteuereinrichtung eine weitere manuelle Bedienung eines Bedieners erkannt und abhängig von der weiteren manuellen Bedienung wird die Bewegung der Plattform durch das Ansteuersignal fortgesetzt oder eingeleitet, wenn das zumindest eine Objekt, insbesondere die Person, in dem Gefahrenbereich vorhanden ist.

Erfindungsgemäß wird mittels der Ansteuereinrichtung durch eine automatisierte Bedienung die Bewegung der Plattform durch das Ansteuersignal fortgesetzt oder eingeleitet, wenn das zumindest eine Objekt, insbesondre die Person, aus dem Gefahrenbereich entfernt ist.

Vorzugsweise wird mittels der Auswerteeinrichtung abhängig von dem erfassten ersten Bild und/oder erfassten weiteren Bild ein Warnsignal bereitgestellt, das ein Vorhandensein des Objekts, insbesondere der Person, in einem Warnbereich charakterisiert.

Vorzugsweise grenzt der Warnbereich an den Gefahrenbereich an.

Vorzugsweise wird mittels der Auswerteeinrichtung eine Ausdehnung des Gefahrenbereichs an eine Schwenkposition der Plattform angepasst.

Das Kraftfahrzeug, insbesondere das Nutzfahrzeug, umfasst eine Hubladebühne gemäß vorherigen Ausführungen.

Die Anhängeeinrichtung, insbesondere ein Anhänger für das Kraftfahrzeug, umfasst eine Hubladebühne gemäß vorheriger Ausführungen.

Weitere vorteilhafte Ausführungsformen ergeben sich aus der folgenden Beschreibung und der Zeichnung. In der Zeichnung zeigt:
- Figur 1: eine schematische Darstellung einer Hubladebühne;
- Figur 2: eine schematische Darstellung einer Bearbeitung eines Bildes;
- Figur 3: eine schematische Darstellung einer Ausführungsform der Hubladebühne;
- Figur 4: eine schematische Darstellung einer Bearbeitung von Bildern der Ausführungsform der Hubladebühne;
- Figur 5: eine schematische Darstellung der Bearbeitung von Bildern der Ausführungsform der Hubladebühne;
- Figur 6: eine schematische Darstellung einer Bearbeitung eines Bildes;
- Figur 7: Schritte in einem Verfahren zum Betreiben der Hubladebühne;
- Figur 8: eine schematische Darstellung eines Kraftfahrzeugs mit einer Anhängeeinrichtung.

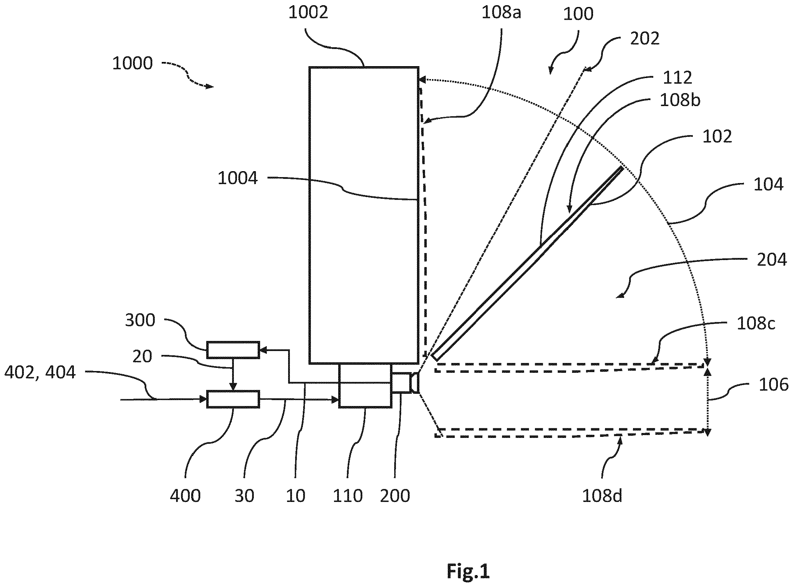

Die Figur 1 zeigt eine schematische Darstellung einer Hubladebühne 100 für ein Kraftfahrzeug 1000, insbesondere für ein Nutzfahrzeug beispielsweise einen Lastkraftwagen. Die Hubladebühne 100 ist im Beispiel ein einem Aufbau 1002 des Kraftfahrzeugs 1000 angeordnet, der beispielsweise einen Laderaum umfasst. Es kann vorgesehen sein, dass die Hubladebühne 100 direkt an dem Kraftfahrzeug 1000 angeordnet ist.

Die Hubladebühne 100 umfasst eine Plattform 102, die ausgebildet ist zumindest teilweise eine Öffnung 1004 des Aufbaus 1002, insbesondere des Laderaums zu verschließen. Des Weiteren umfasst die Hubladebühne 100 eine Antriebeinrichtung 110, die im Beispiel ein Hub- und Schwenkwerk ist und ausgebildet ist die Plattform 102 zu schwenken und abzusenken beziehungsweise anzuheben, um die Öffnung 1004 des Aufbaus 1002 zu öffnen, zu schließen und Ladungen sowie Güter abzusenken beziehungsweise anzuheben. Dabei weist die Hubladebühne 100 im einen Schwenkbereich 104 auf, in dem die Plattform 102 durch die Antriebeinrichtung 110 geschwenkt wird. Im Beispiel wird die Plattform 102 im Schwenkbereich 104 rotatorisch bewegt. Im Beispiel umfasst der Schwenkbereich 104 Schwenkpositionen der Plattform 102 mit Winkelstellungen zwischen 0° und 90° relativ zu der Öffnung 1002 des Aufbaus, wobei in einer 0° Winkelstellung der Plattform 102 die Öffnung 1004 verschlossen ist und in einer 90° Winkelstellung eine Arbeitsfläche 112 der Plattform in einer Ebene mit einem Boden des Aufbaus 1002 liegt. Im Beispiel stellt eine Schwenkposition 108a eine Winkelstellung von 0°, eine Schwenkposition 108b eine Winkelstellung von 45° und eine Schwenkposition 108c eine Winkelstellung von 90° dar. Es kann vorgesehen sein, dass der Schwenkbereich 104 alternative Winkelbereiche zwischen 0° und 360° relativ zu der Öffnung 1004 des Aufbaus 1002 umfasst.

Im Beispiel ist die Antriebseinrichtung 110 weiter ausgebildet die Plattform 102 in einem Absenkbereich 106 abzusenken oder anzuheben. Im Beispiel schließt sich der Absenkbereich 106 an den Schwenkbereich 104 an, wonach ab dem Erreichen der Schwenkposition 108c der Plattform mit einer Winkelstellung von 90° ein translatorisches Absenken oder Anheben der Plattform 102 aus oder in eine Position 108d möglich ist. Die Position 108d stellt dabei eine Endposition des Absenkbereichs 106 dar, die durch die Antriebeinrichtung 110 oder einer Umgebung, beispielsweise einem Untergrund, bestimmt ist.

Es kann vorgesehen sein, dass die Hubladebühne 102 lediglich einen Schwenkbereich umfasst, wobei beispielsweise dieser Schwenkbereich durch die Umgebung, beispielsweise den Untergrund beschränkt wird. Zudem kann vorgesehen sein, dass ein Absenken oder Anheben der Plattform 102 in anderen Schwenkpositionen als der Schwenkposition 108c mit einer Winkelstellung von 90° möglich ist.

Die Hubladebühne 100 umfasst weiter eine Kamera 200, die einen Sichtbereich 202 aufweist. Die Kamera 200 erfasst ein Bild 10 des Sichtbereichs 202 und ist derart angeordnet, dass das Bild 10 zumindest teilweise einen Bereich 204 unterhalb der Plattform 102 abbildet, wenn sich die Plattform 102 in einer Schwenkposition im Sichtbereich 202 der Kamera 200 befindet, wobei diese Schwenkposition im Beispiel repräsentativ durch die Schwenkposition 108b dargestellt ist.

Die Kamera 200 ist im Beispiel an der Antriebseinrichtung 110 angeordnet, beispielsweise an einem Gehäuse der Antriebseinrichtung 110, wobei die Antriebseinrichtung 110 unterhalb der Plattform 102 in der Schwenkposition 108a angeordnet ist. Es kann vorgesehen sein, dass die Kamera 110 benachbart zu der Antriebeinrichtung 110 an dem Kraftfahrzeug 1000 oder dem Aufbau 1002 angeordnet ist. Die Kamera 200 ist derart positioniert, dass der Schwenkbereich 104 der Plattform 102 zumindest teilweise von dem Sichtbereich 202 der Kamera 200 erfasst wird.

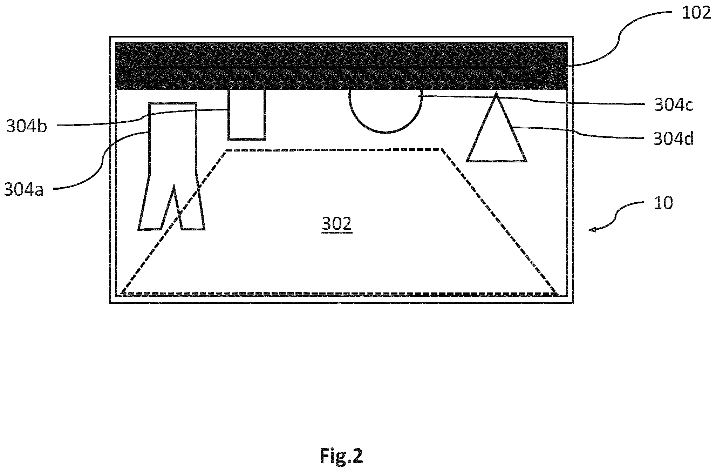

Eine Auswerteeinrichtung 300 der Hubladebühne 100 ermittelt, anhand des durch die Kamera 200 bereitgestellten Bildes 10, ob sich zumindest ein Teil eines Objekts 304a - 304d in einem Gefahrenbereich 302 befindet. Das Objekt 304a - 304d und der Gefahrenbereich 302 sind schematisch in Figur 2 dargestellt. Die Figur 2 zeigt schematisch in einer visuellen Darstellung wie eine Verarbeitung des Bildes 10 der Kamera 200 durch die Auswerteeinrichtung 300 durchgeführt werden kann.

Die Auswerteeinrichtung 300 stellt einer Ansteuereinrichtung 400 der Hubladebühne 100 ein Signal 20 bereit, dass ein Vorhandensein des Objekts 304a - 304d in dem Gefahrenbereich 302 charakterisiert. Dies kann beispielsweise ein Gefahrensignal sein, wenn sich zumindest ein Teil des Objekts 304a - 304d in dem Gefahrenbereich 302 befindet. Der Auswerteeinrichtung 300 kann vorgegeben werden, welche Art oder Arten von Objekten nicht im Gefahrenbereich 302 vorhanden sein dürfen. Dieses Objekt ist im Beispiel eine Person 304a. Die Objekte 304b - 304d können beispielsweise andere Kraftfahrzeuge, Güter, Pakete oder Teile eines Gebäudes sein.

Der Gefahrenbereich 302 repräsentiert einen Bereich in dem potentiell eine Gefahrensituation durch eine Bewegung der Plattform 102 entstehen kann, wie beispielsweise ein Zusammenprall zwischen der Plattform 102 und dem Objekt 304a - 304d. Der Gefahrenbereich 302 kann der Auswerteinrichtung 300 vorgegeben werden oder durch diese bestimmt werden. Beispielsweise kann eine Ausdehnung des Gefahrenbereichs an eine Schwenkposition 108a- 108c beziehungsweise eine Winkelstellung der Plattform 102 angepasst werden. Der Gefahrenbereich 302 ist im Beispiel als eine Pixelmenge in dem Bild 10 dargestellt. Beispielsweise wird die Ausdehnung des Gefahrenbereichs mit zunehmender Öffnung der Plattform 102 vergrößert. Beispielsweise wird die Ausdehnung des Gefahrenbereichs mit abnehmender Öffnung der Plattform 102 verkleinert. Beispielsweise wird die Ausdehnung des Gefahrenbereichs derart angepasst, dass der Gefahrenbereich eine Projektionsfläche der Plattform 102 auf den Untergrund umfasst.

Die Auswerteeinrichtung 300 erkennt mittels einer Bildverarbeitung oder Objekterkennung ob und an welcher Position sich die Person 304a oder ein Teil der Person 304a im Bild 10 befindet. Weiter ermittelt die Auswerteeinrichtung 300, ob sich zumindest ein Teil der Person 304a in dem Gefahrenbereich 302 befindet. Dies ist beispielsweise durch einen Vergleich von der Person 304a zugeordneten Pixeln des Bildes 10 mit dem Gefahrenbereich zugeordneten Pixeln des Bildes 10 möglich.

Erkennt die Auswerteinrichtung, dass zumindest einen Teil der Person 304a in dem Gefahrenbereich 302 vorhanden ist, stellt diese im Beispiel der Ansteuereinrichtung 400 das Signal 20 bereit. Die Ansteuereinrichtung 400 stellt der Antriebseinrichtung 110 abhängig von dem Signal 20 ein Ansteuersignal 30 bereit. Das Ansteuersignal 30 bewirkt, dass die Bewegung der Plattform 102 durch die Ansteuereinrichtung 110 gestoppt wird oder unterbunden wird, wenn die Person 304a zumindest teilweise in dem Gefahrenbereich 302 vorhanden ist. Es kann vorgesehen sein, dass lediglich eine öffnende Bewegung der Plattform 102 gestoppt oder unterbunden wird.

Die Ansteuereinrichtung 400 kann zudem ausgebildet sein einen Regelbetrieb der Hubladebühne 100 umzusetzen. Dieser Regelbetrieb umfasst beispielsweise ein Erkennen und entsprechendes Verarbeiten von Bedienungen eines Bedieners der Hubladebühne 100. Dies können exemplarisch ein manuelles oder automatisiertes Öffnen, Schließen, Anheben oder Absenken der Plattform 102 umfassen.

Es kann vorgesehen sein, dass die Auswerteinrichtung 400 ausgebildet ist eine manuelle Bedienung 402 des Bedieners zu erkennen. Die Ansteuereinrichtung 400 stellt abhängig von der manuellen Bedienung 402 und dem Signal 20 das Ansteuersignal 30 derart bereit, dass die Bewegung der Plattform 102 fortgesetzt wird beziehungsweise eingeleitet wird, wenn die Person 304a aus dem Gefahrenbereich 302 entfernt ist und die Bewegung der Plattform 102 zuvor, aufgrund eines Vorhandenseins der Person 304a in dem Gefahrenbereich 302, gestoppt wurde beziehungsweise unterbunden wurde.

Es kann weiter vorgesehen sein, dass die Auswerteinrichtung 400 ausgebildet ist eine weitere manuelle Bedienung 404 des Bedieners zu erkennen. Die Ansteuereinrichtung 400 stellt abhängig von der weiteren manuellen Bedienung 404 das Ansteuersignal 30 derart bereit, dass die Bewegung der Plattform 102 fortgesetzt wird beziehungsweise eingeleitet wird, wenn die Person 304a in dem Gefahrenbereich 302 vorhanden ist und die Bewegung der Plattform 102 zuvor aufgrund des Vorhandenseins der Person 304a in dem Gefahrenbereich 302 gestoppt wurde beziehungsweise unterbunden wurde. Es kann vorgesehen sein, dass die weitere manuelle Bedienung 404 die Bewegung der Plattform 102 initial einleitet oder fortsetzt, ohne dass die Bewegung der Plattform 102 bei einem Vorhandensein der Person 304a in dem Gefahrenbereich zuvor gestoppt oder unterbunden wurde.

Die manuelle Bedienung 402 und/oder die weitere manuelle Bedienung 404 können beispielsweise mittels eine drahtlosen oder kabelgebundenen Übertragung von einer Eingabeeinrichtung an die Ansteuereinrichtung 400 übertragen werden. Dabei gibt der Bediener seine Eingabe in Form der manuellen Bedienung 402 und/oder der weiteren manuellen Bedienung 404 an der Eingabeeinrichtung ein. Es kann vorgesehen sein, dass der Bediener seine Eingabe direkt an der Ansteuereinrichtung 400 vornimmt, beispielsweise mittels Tasten oder Hebeln.

Die Auswerteeinrichtung 400 kann ausgebildet sein, das Ansteuersignal 30 derart bereitzustellen, dass die Bewegung der Plattform 102 automatisiert fortzusetzen oder einzuleiten, wenn die Person 304a aus dem Gefahrenbereich 302 entfernt ist und die Bewegung der Plattform 302 zuvor, aufgrund eines Vorhandenseins der Person 304a in dem Gefahrenbereich 302, gestoppt wurde beziehungsweise unterbunden wurde.

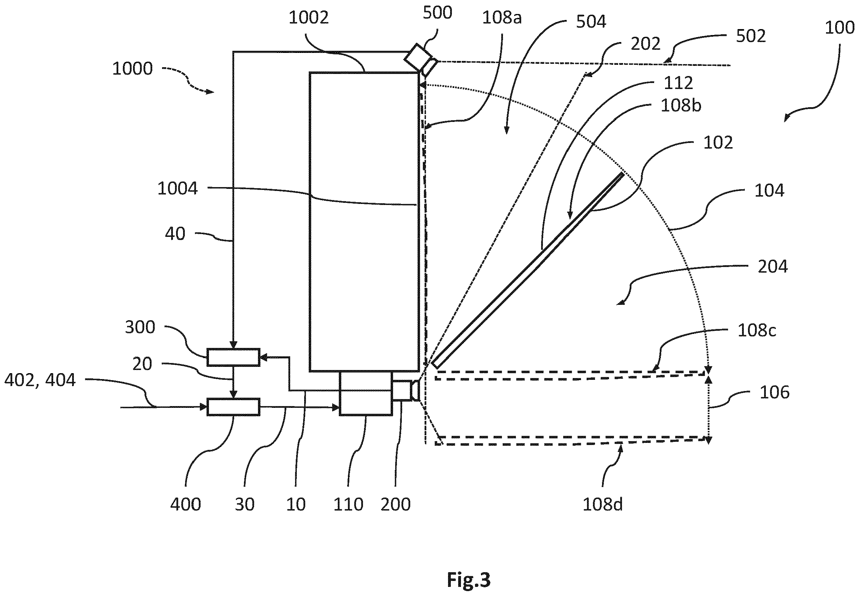

Die Figur 3 zeigt eine Ausführungsform der Hubladebühne 100, wobei diese eine weitere Kamera 500 umfasst. Die weitere Kamera 500 weist einen Sichtbereich 502 auf und erfasst ein weiteres Bild 40 des Sichtbereichs 502. Die Kamera 500 ist derart angeordnet, dass das Bild 40 zumindest teilweise einen Bereich 504 abbildet, der die Arbeitsfläche 112 der Plattform 102 umfasst, wenn sich die Plattform 102 in einer Schwenkposition in dem Sichtbereich 502 der Kamera 500 befindet, wobei diese Schwenkposition im Beispiel repräsentativ durch die Schwenkposition 108b dargestellt ist.

Im Beispiel ist die weiter Kamera 500 an dem Aufbau 1002 des Kraftfahrzeugs 1000 angeordnet. Zudem sind beispielsweise die Kamera 200 und die weitere Kamera 500 derart angeordnet, dass sich der Sichtbereich 202 der Kamera 200 und der Sichtbereich 502 der weiteren Kamera 500 zumindest teilweise überschneiden.

Die Auswerteeinrichtung 300 ist in dieser Ausführungsform ausgebildet anhand von dem erfassten Bild 10 und dem erfassten weiteren Bild 40 zu ermitteln, ob sich zumindest ein Teil der Person 304a in dem Gefahrenbereich 302 befindet. Die Auswerteeinrichtung 300 stellt der Ansteuereinrichtung 400 das Signal 20, das das Vorhandensein der Person 304a in dem Gefahrenbereich 302 charakterisiert, in dieser Ausführungsform abhängig von dem Bild 10 und dem weiteren Bild 40 bereit.

Es kann vorgesehen sein, dass die Auswerteinrichtung 300 in die Kamera 200 oder die weitere Kamera 500 integriert ist. Zudem kann die Ansteuereinrichtung 400 in der Antriebeinrichtung 110 integriert sein. Weiter ist ein Embedded System Design der Ansteuereinrichtung 400 und der Auswerteeinrichtung 300 möglich.

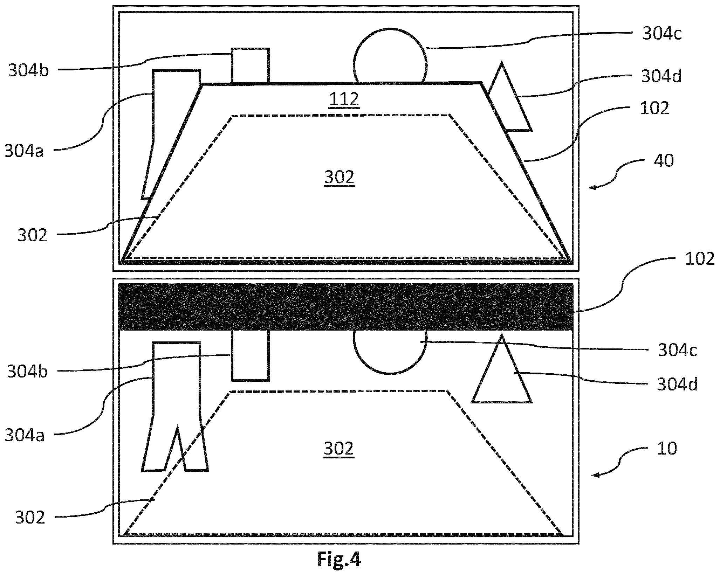

Die Figur 4 zeigt schematisch in einer visuellen Darstellung wie eine Verarbeitung des Bildes 10 der Kamera 200 und des weiteren Bildes 40 der weiteren Kamera 500 durch die Auswerteeinrichtung 300 durchgeführt werden kann. Im Beispiel befindet sich die Plattform 102 in der Schwenkposition 108b. Die Kamera 200 erfasst das Bild 10, das den Bereich 204 unterhalb der Plattform 102 abbildet. Die weitere Kamera 500 erfasst das Bild 40, das den Bereich 504, der die Arbeitsfläche 112 umfasst, abbildet.

Im gezeigten Beispiel ist der Sichtbereich 502 der weiteren Kamera 500 teilweise durch die Plattform 102 verdeckt. Die Auswerteeinrichtung 300 erkennt anhand des weiteren Bildes 40 alleine nicht, dass sich ein Teil der Person 304a im Gefahrenbereich 302 befindet. Mittels des Bildes 10 der Kamera 200 erkennt die Auswerteeinrichtung 300, dass ein Teil der Person 304a im Gefahrenbereich 302 vorhanden ist und stellt der Ansteuereinrichtung 400 das Signal 20 bereit.

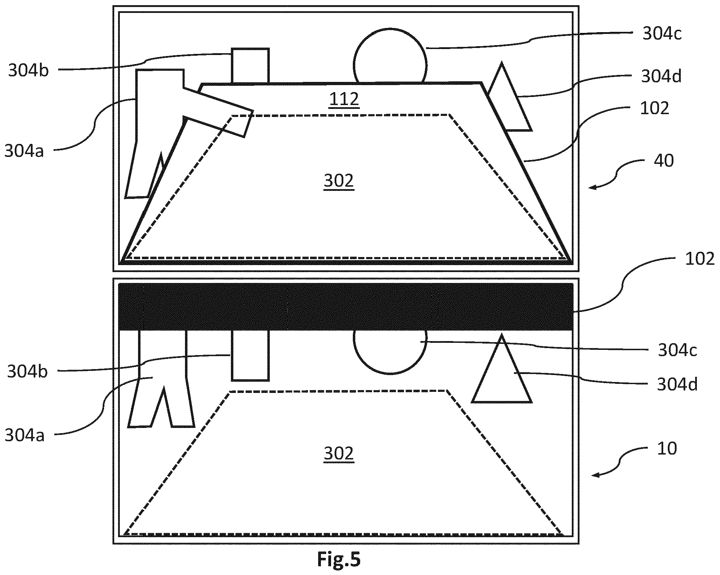

In der Figur 5 zeigt eine weitere Verarbeitung des Bildes 10 und des weiteren Bildes 40 der Auswertungseinrichtung 300. Die Kamera 200 erfasst das Bild 10, das den Bereich 204 unterhalb der Plattform 102 abbildet. Die weitere Kamera 500 erfasst das Bild 40, das den Bereich 504, der die Arbeitsfläche 112 umfasst, abbildet. Die Plattform ist im Beispiel in der Schwenkposition 108b.

Im gezeigten Beispiel ist der Sichtbereich 502 der weiteren Kamera 500 teilweise durch die Plattform 102 verdeckt. Zudem ist der Sichtbereich 202 der Kamera 200 ebenfalls durch die Plattform 102 verdeckt. Anhand des Bildes 10 alleine erkennt die Auswerteeinrichtung nicht, dass sich ein Teil der Person 304a in dem Gefahrenbereich 302 befindet. Mittels des weiteren Bildes 40 der weiteren Kamera 500 erkennt die Auswerteeinrichtung 300, dass ein Teil der Person 304a im Gefahrenbereich 302 vorhanden ist und stellt der Ansteuereinrichtung 400 das Signal 20 bereit.

Es kann vorgesehen sein, dass abhängig davon, ob im Bild 10 oder im weiteren Bild 40 das Vorhandensein zumindest eines Teils der Person 304a erkannt wird und abhängig davon, ob sich die Plattform 102 in einer öffnenden oder schließenden Bewegung befindet, die Bewegung der Plattform 102 gestoppt oder unterbunden beziehungsweise nicht gestoppt oder nicht unterbunden wird.

Es kann vorgesehen sein, dass die Arbeitsfläche 112 aus dem Gefahrenbereich 302 ausgeblendet wird. Die Arbeitsfläche 112 kann beispielweise mittels einer Bildverarbeitung beziehungsweise Objekterkennung durch die Auswerteeinrichtung 200 in dem Bild 10 oder dem weiteren Bild 40 erkannt werden und dementsprechend im Gefahrenbereich 302 unberücksichtigt bleiben.

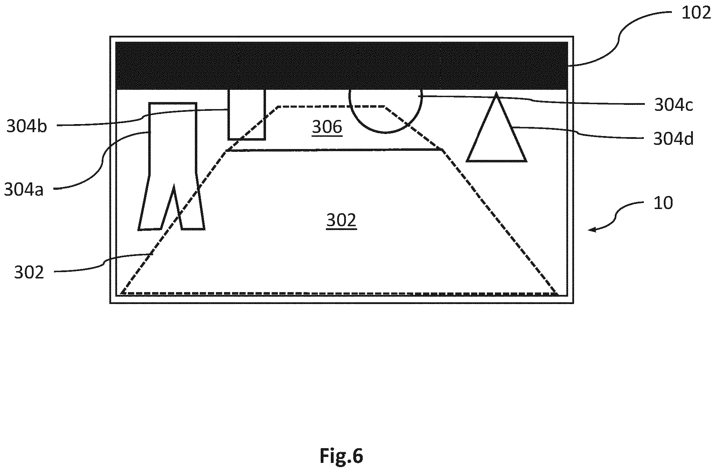

Die Figur 6 zeigt eine Bearbeitung in einem exemplarischen Beispiel des Bildes 10.Es kann vorgesehen sein, dass die Auswerteeinrichtung 300 ausgebildet ist ein Warnsignal, beispielsweise ein Signalton bereitzustellen, wenn sich die Person 304a in einem Warnbereich 306 befindet. Der Warnbereich 306 ist im Beispiel an den Gefahrenbereich 302 angrenzend.

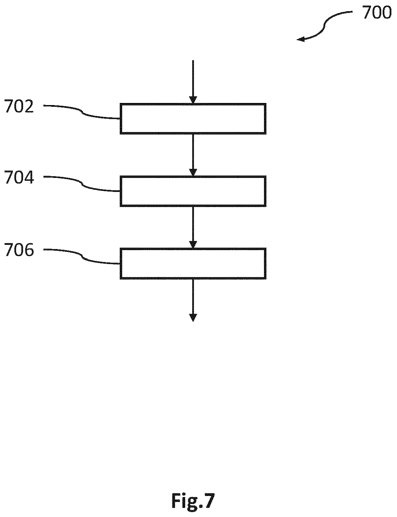

Die Figur 7 zeigt Schritte eines Verfahrens 700 zum Betreiben der Hubladebühne 102 anhand der Ausführungsform der Hubladebühne 102 gemäß der Figur 3.

In einem Schritt 702 wird mittels der Kamera 200 das Bild 10 des Sichtbereichs 202 erfasst. Zudem wird mittels der Kamera 500 das weitere Bild 40 des Sichtbereichs 502 der weiteren Kamera 500 erfasst.

In einem Schritt 704 wird das Signal 20, das ein Vorhandensein der Person 304a in dem Gefahrenbereich charakterisiert, von der Auswerteeinrichtung 300 abhängig von dem Bild 10 und dem weiteren Bild 40 bereitgestellt. Dabei erkennt die Auswerteeinrichtung 300 beispielsweise mittels einer Bildverarbeitung oder Objekterkennung die Person 304a und bestimmt, ob diese in dem Gefahrenbereich 302 vorhanden ist.

In einem Schritt 706 wird die Bewegung der Plattform 102 mittels des Ansteuersignals 30, dass von der Ansteuereinrichtung 400 abhängig von dem Signal 20 bereitgestellt wird, gestoppt oder unterbunden.

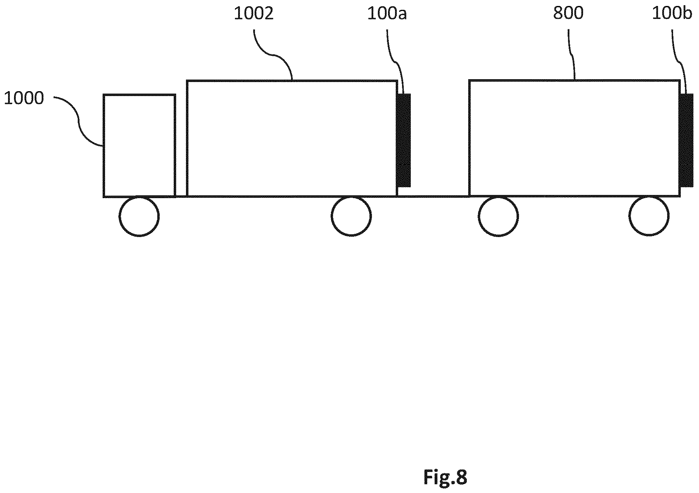

Die Figur 8 zeigt ein Gespann umfassen das Kraftfahrzeug 1000 und eine Anhängeeinrichtung 800 für das Kraftfahrzeug 1000. Das Kraftfahrzeug 1000 und die Anhängeeinrichtung 800 umfassen jeweils eine Hubladebühne 100a und 100b, wobei diese Hubladebühnen gemäß obiger Ausführung ausgestaltet sind.

Es kann vorgesehen sein, dass die Hubladebühne 100a und 100b eine zentralisierte Auswerteeinrichtung 300 und/oder Ansteuereinrichtung 400 umfassen. Es kann auch vorgesehen sein, dass nur die Anhängeeinrichtung 800 die Hubladebühne 100b gemäß obiger Ausführung alleine umfasst.

Beispielsweise sind die Kameras 200, 500 dazu eingerichtet einen rechteckförmigen Bereich zu überwachen der insbesondere mindestens jeweils 1,2 m seitlich der Plattform 102 und 4 m entgegen einer Fahrtrichtung des Kraftfahrzeugs 1000 zuzüglich einer Plattformhöhe zu überwachen. Das bedeutet, der Gefahrenbereich wird beispielsweise wenn die Plattform 102 auf dem Boden aufliegt, in der Tiefe mindestens auf eine der Plattformhöhe entsprechende Länge insbesondere hinter dem Kraftfahrzeug 1000 oder länger, z.B. 4m länger als die auf dem Boden aufliegende Länge der Plattform 102 eingestellt. Das bedeutet, der Gefahrenbereich wird beispielsweise wenn die Plattform 102 auf dem Boden aufliegt, in der Breite mindestens auf eine einer Plattformbreite entsprechende Breite insbesondere hinter dem Kraftfahrzeug 1000 oder breiter, z.B. 1,2m breiter als die auf dem Boden aufliegende Breite der Plattform 102 eingestellt. Beispielsweise ist der Gefahrenbereich durch die Pixelmenge definiert, welche die vollständig abgesenkte Plattform 102 im Bild der jeweiligen Kamera repräsentiert oder umfasst.

## Patentansprüche

1. Hubladebühne (100) für ein Kraftfahrzeug (1000), insbesondere ein Nutzfahrzeug, umfassend:
eine Plattform (102);
zumindest eine Kamera (200), die ausgebildet ist, ein Bild (10) eines Sichtbereichs (202) der Kamera (200) zu erfassen, wobei die Kamera (200) derart angeordnet ist, dass das Bild (10) zumindest teilweise einen Bereich (204) unterhalb der Plattform (102) abbildet, wenn sich die Plattform (102) in einer Schwenkposition (108b) im Sichtbereich (202) der Kamera (200) befindet;
eine Auswerteeinrichtung (300), die ausgebildet ist, abhängig von dem erfassten Bild (10) ein Signal (20) bereitzustellen, das ein Vorhandensein zumindest eines Teils eines Objekts (304a - 304b), insbesondere einer Person (304a), in einem Gefahrenbereich (302) charakterisiert; und
eine Ansteuereinrichtung (400), die ausgebildet ist, abhängig vom Signal (20) mittels eines Ansteuersignals (30) eine Bewegung der Plattform (102) zu stoppen oder zu unterbinden,
wobei die Ansteuereinrichtung (400) ausgebildet ist, mittels einer automatisierten Bedienung die Bewegung der Plattform (102) mittels des Ansteuersignals (30) fortzusetzen oder einzuleiten, wenn das zumindest eine Objekt (304a- 304d), insbesondere die Person (304a), aus dem Gefahrenbereich (302) entfernt ist.

2. Die Hubladebühne (100) nach Anspruch 1, wobei die Kamera (200) in einem Bereich um eine Antriebeinrichtung (110) der Hubladebühne (100) angeordnet oder anordenbar ist.

3. Die Hubladebühne (100) nach einem der vorigen Ansprüche, wobei die Plattform (102) eine Arbeitsfläche (112) umfasst umfassend zumindest eine weitere Kamera (500), die ausgebildet ist ein weiteres Bild (40) eines Sichtbereichs (502) der weitern Kamera (500) zu erfassen, wobei die weitere Kamera (500) derart angeordnet ist, dass das weitere Bild (40) zumindest teilweise einen Bereich (504) abbildet, der die Arbeitsfläche (112) der Plattform (102) umfasst, wenn sich die Plattform (102) in der Schwenkposition (108b) in dem Sichtbereich (502) der weiteren Kamera (500) befindet, und/oder wobei die Auswerteeinrichtung (300) ausgebildet ist, die Arbeitsfläche (112) der Plattform (102) aus dem Gefahrenbereich (302) auszublenden.

4. Die Hubladebühne (100) nach Anspruch 3, wobei die weitere Kamera (500) an einem Aufbau (1002) des Kraftfahrzeugs (1000) angeordnet oder anordenbar ist.

5. Die Hubladebühne (100) nach einem der Ansprüche 3 oder 4, wobei sich der Sichtbereich (202) der Kamera (200) und der Sichtbereich (502) der weiteren Kamera (500) zumindest teilweise überschneiden und die Auswerteeinrichtung (300) ausgebildet ist, abhängig von dem erfassten Bild (10) und abhängig von dem erfassten weiteren Bild (40) das Signal (20) bereitzustellen, das das Vorhandensein des Objekts (304a - 304 d), insbesondere der Person (304a), in dem Gefahrenbereich (302) charakterisiert, und
dass die Ansteuereinrichtung (400) ausgebildet ist, abhängig vom Signal (20) die Bewegung der Plattform (102) mittels Ansteuersignals (30) zu stoppen oder zu unterbinden.

6. Die Hubladebühne (100) nach einem der vorigen Ansprüche, wobei die Ansteuereinrichtung (400) ausgebildet ist, eine manuelle Bedienung (402) eines Bedieners zu erkennen und abhängig vom Signal (20) und der manuellen Bedienung (402) die Bewegung der Plattform (102) mittels des Ansteuersignals (30) fortzusetzen oder einzuleiten.

7. Die Hubladebühne (100) nach einem der vorigen Ansprüche, wobei die Ansteuereinrichtung (400) ausgebildet ist, eine manuelle Bedienung (404) eines Bedieners zu erkennen und abhängig von der manuellen Bedienung (404) die Bewegung der Plattform (102) mittels des Ansteuersignals (30) fortzusetzen oder einzuleiten, wenn das zumindest eine Objekt (304a-304d), insbesondere die Person (304a), in dem Gefahrenbereich (302) vorhanden ist.

8. Die Hubladebühne (100) nach einem der vorigen Ansprüche, wobei die Auswerteeinrichtung (300) ausgebildet ist, abhängig von dem erfassten Bild (10) und/oder dem erfassten weiteren Bild (40) ein Warnsignal bereit zu stellen, das ein Vorhandensein des Objekts (304a- 304d), insbesondere der Person (304a), in einem Warnbereich (306) charakterisiert.

9. Die Hubladebühne (100) nach Anspruch 8, wobei der Warnbereich (306) an den Gefahrenbereich (302) angrenzt.

10. Die Hubladebühne (100) nach einem der vorigen Ansprüche, wobei die Auswerteeinrichtung (300) ausgebildet ist, eine Ausdehnung des Gefahrenbereichs (302) an eine Schwenkposition (108a- 108c) der Plattform (102) anzupassen.

11. Ein Verfahren (700) zum Betreiben einer Hubladebühne (100) für ein Kraftfahrzeug (1000), insbesondere ein Nutzfahrzeug, wobei mittels einer Kamera (200) ein Bild (10) eines Sichtbereichs (202) erfasst (702) wird, das zumindest teilweise ein Bereich (204) unterhalb einer Plattform (102) der Hubladebühne (100) abbildet, wenn sich die Plattform (102) in einer Schwenkposition (108b) im Sichtbereich (202) der Kamera (200) befindet, wobei mittels einer Auswerteeinrichtung (300) abhängig von dem erfassten Bild (10) ein Signal (20) bereitgestellt (704) wird, das ein Vorhandensein zumindest eines Teils eines Objekts (304a - 304d), insbesondere einer Person (304a), in einem Gefahrenbereich (302) charakterisiert, und wobei mittels einer Ansteuereinrichtung (400) abhängig vom Signal (20) eine Bewegung die Plattform (102) durch ein Ansteuersignal (30) gestoppt wird oder unterbunden (706) wird,
wobei mittels der Ansteuereinrichtung (400) durch eine automatisierte Bedienung die Bewegung der Plattform (102) durch das Ansteuersignal (30) fortgesetzt wird oder eingeleitet wird, wenn das zumindest eine Objekt (304a - 304 d), insbesondere die Person (304a), aus dem Gefahrenbereich (302) entfernt ist.

12. Das Verfahren (700) nach Anspruch 11, wobei die Plattform (102) eine Arbeitsfläche (112) umfasst, wobei mittels einer weiteren Kamera (500) ein weiteres Bild (40) eines Sichtbereichs (502) der weiteren Kamera (500) erfasst (702) wird, das zumindest teilweise ein Bereich (504) abbildet, der die Arbeitsfläche (112) der Plattform (102) umfasst, wenn sich die Plattform (102) in der Schwenkposition (108b) in dem Sichtbereich (502) der weiteren Kamera (500) befindet, und/oder wobei mittels der Auswerteeinrichtung (300) die Arbeitsfläche (112) der Plattform (102) aus dem Gefahrenbereich (302) ausgeblendet wird.

13. Das Verfahren (700) nach Anspruch 12, wobei sich der Sichtbereich (202) der Kamera (200) und der Sichtbereich (502) der weiteren Kamera (500) zumindest teilweise überschneiden und mittels der Auswerteeinrichtung (300) abhängig von dem erfassten Bild (10) und dem erfassten weiteren Bild (40) das Signal (20) bereitgestellt (704) wird, das das Vorhandensein des Objekts (304a - 304d), insbesondere der Person (304a), in dem Gefahrenbereich (302) charakterisiert , und dass mittels der Ansteuereinrichtung (400) abhängig vom Signal (20) die Bewegung der Plattform (102) durch das Ansteuersignal (30) gestoppt wird oder unterbunden (706) wird.

14. Das Verfahren (700) nach einem der Ansprüche 11 bis 13, wobei mittels der Ansteuereinrichtung (300) eine manuelle Bedienung (402) eines Bedieners erkannt wird und abhängig vom Signal (20) und der manuellen Bedienung (402) die Bewegung der Plattform (102) durch das Ansteuersignal (30) fortgesetzt wird oder eingeleitet wird.

15. Das Verfahren (700) nach einem der Ansprüche 11 bis 14, wobei mittels der Ansteuereinrichtung (400) eine manuelle Bedienung (404) eines Bedieners erkannt wird und abhängig von der manuellen Bedienung (404) die Bewegung der Plattform (102) durch das Ansteuersignal (30) fortgesetzt wird oder eingeleitet wird, wenn das zumindest eine Objekt (304a - 304d), insbesondere die Person (304a), in dem Gefahrenbereich (302) vorhanden ist.

16. Das Verfahren (700) nach einem der Ansprüche 11 bis 15, wobei mittels der Auswerteeinrichtung (300) abhängig von dem erfassten ersten Bild (10) und/oder erfassten weiteren Bild (40) ein Warnsignal bereitgestellt wird, das ein Vorhandensein des Objekts (304a - 304d), insbesondere der Person (304a), in einem Warnbereich (306) charakterisiert.

17. Das Verfahren (700) nach Anspruch 16, wobei der Warnbereich (306) an den Gefahrenbereich (302) angrenzt.

18. Das Verfahren (700) nach einem der Ansprüche 11 bis 17, wobei mittels der Auswerteeinrichtung (300) eine Ausdehnung des Gefahrenbereichs (302) an eine Schwenkposition (108a - 108c) der Plattform (102) angepasst wird.

19. Ein Kraftfahrzeug (1000), insbesondere ein Nutzfahrzeug, das eine Hubladebühne (100, 100a) gemäß wenigstens einem der Ansprüche 1 bis 10 umfasst.

20. Eine Anhängeeinrichtung (800), insbesondere einen Anhänger für ein Kraftfahrzeug (1000), die eine Hubladebühne (100, 100b) gemäß einem der Ansprüche 1 bis 10 umfasst.

## Claims

1. Tail lift (100) for a motor vehicle (1000), in particular a commercial vehicle, comprising:
a platform (102);
at least one camera (200) which is designed to capture an image (10) of a field of view (202) of the camera (200), wherein the camera (200) is arranged such that the image (10) at least partially maps a region (204) below the platform (102) when the platform (102) is in a pivoting position (108b) in the field of view (202) of the camera (200);
an evaluation device (300) which is designed, depending on the captured image (10), to provide a signal (20) which characterizes a presence of at least part of an object (304a - 304b), in particular a person (304a), in a danger region (302); and
a control device (400) which is designed, depending on the signal (20), to stop or prevent a movement of the platform (102) by means of a control signal (30),
wherein the control device (400) is designed, by means of an automated operation, to continue or initiate the movement of the platform (102) by means of the control signal (30) when the at least one object (304a- 304d), in particular the person (304a), is remote from the danger region (302).

2. The tail lift (100) according to claim 1, wherein the camera (200) is arranged or can be arranged in a region around a drive device (110) of the tail lift (100).

3. The tail lift (100) according to either of the preceding claims, wherein the platform (102) comprises a work surface (112) comprising at least one further camera (500) which is designed to capture a further image (40) of a field of view (502) of the further camera (500), wherein the further camera (500) is arranged such that the further image (40) at least partially maps a region (504) which includes the work surface (112) of the platform (102) when the platform (102) is in the pivoting position (108b) in the field of view (502) of the further camera (500), and/or wherein the evaluation device (300) is designed to hide the work surface (112) of the platform (102) from the danger region (302).

4. The tail lift (100) according to claim 3, wherein the further camera (500) is arranged or can be arranged on a body (1002) of the motor vehicle (1000).

5. The tail lift (100) according to any of claims 3 or 4, wherein the field of view (202) of the camera (200) and the field of view (502) of the further camera (500) at least partially overlap and the evaluation device (300) is designed, depending on the captured image (10) and depending on the captured further image (40), to provide the signal (20) which characterizes the presence of the object (304a - 304d), in particular the person (304a), in the danger region (302), and
wherein the control device (400) is designed, depending on the signal (20), to stop or prevent the movement of the platform (102) by means of the control signal (30).

6. The tail lift (100) according to any of the preceding claims, wherein the control device (400) is designed to recognize a manual operation (402) of an operator and, depending on the signal (20) and the manual operation (402), to continue or initiate the movement of the platform (102) by means of the control signal (30).

7. The tail lift (100) according to any of the preceding claims, wherein the control device (400) is designed to recognize a manual operation (404) of an operator and, depending on the manual operation (404), to continue or initiate the movement of the platform (102) by means of the control signal (30) when the at least one object (304a-304d), in particular the person (304a), is present in the danger region (302).

8. The tail lift (100) according to any of the preceding claims, wherein the evaluation device (300) is designed, depending on the captured image (10) and/or the captured further image (40), to provide a warning signal which characterizes a presence of the object (304a-304d), in particular the person (304a), in a warning region (306).

9. The tail lift (100) according to claim 8, wherein the warning region (306) is adjacent to the danger region (302).

10. The tail lift (100) according to any of the preceding claims, wherein the evaluation device (300) is designed to adapt an extent of the danger region (302) to a pivoting position (108a - 108c) of the platform (102).

11. A method (700) for operating a tail lift (100) for a motor vehicle (1000), in particular a commercial vehicle, wherein, by means of a camera (200), an image (10) of a field of view (202) is captured (702) which at least partially maps a region (204) below a platform (102) of the tail lift (100) when the platform (102) is in a pivoting position (108b) in the field of view (202) of the camera (200), wherein, depending on the captured image (10), a signal (20) is provided (704) by means of an evaluation device (300) which characterizes a presence of at least part of an object (304a - 304d), in particular a person (304a), in a danger region (302), and wherein, by means of a control device (400), depending on the signal (20), a movement of the platform (102) is stopped or prevented (706) by a control signal (30),
wherein, by means of the control device (400), through an automated operation, the movement of the platform (102) is continued or initiated by the control signal (30) when the at least one object (304a - 304d), in particular the person (304a), is remote from the danger region (302).

12. The method (700) according to claim 11, wherein the platform (102) comprises a work surface (112), wherein, by means of a further camera (500), a further image (40) of a field of view (502) of the further camera (500) is captured (702) which at least partially maps a region (504) which includes the work surface (112) of the platform (102) when the platform (102) is in the pivoting position (108b) in the field of view (502) of the further camera (500), and/or wherein, by means of the evaluation device (300), the work surface (112) of the platform (102) is hidden from the danger region (302).

13. The method (700) according to claim 12, wherein the field of view (202) of the camera (200) and the field of view (502) of the further camera (500) at least partially overlap and the signal (20) which characterizes the presence of the object (304a - 304d), in particular the person (304a), in the danger region (302) is provided (704) by means of the evaluation device (300) depending on the captured image (10) and the captured further image (40), and wherein, by means of the control device (400), depending on the signal (20), the movement of the platform (102) is stopped or prevented (706) by the control signal (30).

14. The method (700) according to any of claims 11 to 13, wherein a manual operation (402) of an operator is recognized by means of the control device (300) and, depending on the signal (20) and the manual operation (402), the movement of the platform (102) is continued or initiated by the control signal (30).

15. The method (700) according to any of claims 11 to 14, wherein a manual operation (404) of an operator is recognized by means of the control device (400) and, depending on the manual operation (404), the movement of the platform (102) is continued or initiated by the control signal (30) when the at least one object (304a - 304d), in particular the person (304a), is present in the danger region (302).

16. The method (700) according to any of claims 11 to 15, wherein, depending on the captured first image (10) and/or the captured further image (40), a warning signal is provided by means of the evaluation device (300),which characterizes a presence of the object (304a - 304d), in particular the person (304a), in a warning region (306).

17. The method (700) according to claim 16, wherein the warning region (306) is adjacent to the danger region (302).

18. The method (700) according to any of claims 11 to 17, wherein, by means of the evaluation device (300), an extent of the danger region (302) is adapted to a pivoting position (108a - 108c) of the platform (102).

19. A motor vehicle (1000), in particular a commercial vehicle, comprising a tail lift (100, 100a) according to at least one of claims 1 to 10.

20. A trailer device (800), in particular a trailer for a motor vehicle (1000), comprising a tail lift (100, 100b) according to any of claims 1 to 10.

## Revendications

1. Hayon élévateur (100) pour un véhicule automobile (1000), en particulier un véhicule utilitaire, comprenant ; une plate-forme (102) ;
au moins une caméra (200) qui est conçue pour acquérir une image (10) d'une zone de vision (202) de la caméra (200), dans lequel la caméra (200) est disposée de telle sorte que l'image (10) représente au moins partiellement une zone (204) au-dessous de la plate-forme (102) lorsque la plate-forme (102) se trouve dans une position de pivotement (108b) dans la zone de vision (202) de la caméra (200) ;
un dispositif d'évaluation (300) qui est conçu pour fournir, en fonction de l'image (10) acquise, un signal (20) qui caractérise une présence d'au moins une partie d'un objet (304a - 304b), en particulier d'une personne (304a), dans une zone de danger (302) ; et
un dispositif de commande (400) qui est conçu pour arrêter ou empêcher un mouvement de la plate-forme (102) en fonction du signal (20) au moyen d'un signal de commande (30),
dans lequel le dispositif de commande (400) est conçu pour poursuivre ou déclencher, au moyen d'une commande automatisée, le mouvement de la plate-forme (102) au moyen du signal de commande (30), lorsque l'au moins un objet (304a-304d), en particulier la personne (304a), est éloigné de la zone de danger (302).

2. Hayon élévateur (100) selon la revendication 1, dans lequel la caméra (200) est disposée ou peut être disposée dans une zone autour d'un dispositif d'entraînement (110) du hayon élévateur (100).

3. Hayon élévateur (100) selon l'une quelconque des revendications précédentes, dans lequel la plate-forme (102) comprend une surface de travail (112) comprenant au moins une autre caméra (500) qui est conçue pour acquérir une autre image (40) d'une zone de vision (502) de l'autre caméra (500), dans lequel l'autre caméra (500) est disposée de telle sorte que l'autre image (40) représente au moins partiellement une zone (504) qui comprend la surface de travail (112) de la plate-forme (102) lorsque la plate-forme (102) se trouve dans la position de pivotement (108b) dans la zone de vision (502) de l'autre caméra (500), et/ou dans lequel le dispositif d'évaluation (300) est conçu pour éliminer la surface de travail (112) de la plate-forme (102) de la zone de danger (302) par masque.

4. Hayon élévateur (100) selon la revendication 3, dans lequel l'autre caméra (500) est disposée ou peut être disposée sur une carrosserie (1002) du véhicule automobile (1000).

5. Hayon élévateur (100) selon l'une quelconque des revendications 3 ou 4, dans lequel la zone de vision (202) de la caméra (200) et la zone de vision (502) de l'autre caméra (500) se chevauchent au moins partiellement et le dispositif d'évaluation (300) est conçu pour fournir le signal (20) en fonction de l'image (10) acquise et en fonction de l'autre l'autre image (40) acquise, qui caractérise la présence de l'objet (304a - 304d), en particulier de la personne (304a), dans la zone de danger (302), et que le dispositif de commande (400) est conçu pour arrêter ou empêcher le mouvement de la plate-forme (102) en fonction du signal (20) au moyen d'un signal de commande (30).

6. Hayon élévateur (100) selon l'une quelconque des revendications précédentes, dans lequel le dispositif de commande (400) est conçu pour identifier une commande utilisateur manuelle (402) d'un utilisateur et, en fonction du signal (20) et de la commande utilisateur manuelle (402), pour poursuivre ou déclencher le mouvement de la plate-forme (102) au moyen du signal de commande (30).

7. Hayon élévateur (100) selon l'une quelconque des revendications précédentes, dans lequel le dispositif de commande (400) est conçu pour identifier une commande utilisateur manuelle (404) d'un utilisateur et, en fonction de la commande utilisateur manuelle (404), pour poursuivre ou déclencher le mouvement de la plate-forme (102) au moyen du signal de commande (30) lorsque l'au moins un objet (304a-304d), en particulier la personne (304a), est présent dans la zone de danger (302).

8. Hayon élévateur (100) selon l'une quelconque des
revendications précédentes, dans lequel le dispositif d'évaluation (300) est conçu pour fournir, en fonction de l'image (10) acquise et/ou de l'autre image (40) acquise, un signal d'avertissement qui caractérise une présence de l'objet (304a- 304d), en particulier de la personne (304a), dans une zone d'avertissement (306).

9. Hayon élévateur (100) selon la revendication 8, dans lequel la zone d'avertissement (306) est adjacente à la zone de danger (302).

10. Hayon élévateur (100) selon l'une quelconque des revendications précédentes, dans lequel le dispositif d'évaluation (300) est conçu pour adapter une extension de la zone de danger (302) à une position de pivotement (108a-108c) de la plate-forme (102).

11. Procédé (700) pour faire fonctionner un hayon élévateur (100) pour un véhicule automobile (1000), en particulier un véhicule utilitaire, dans lequel une image (10) d'une zone de vision (202) est acquise (702) au moyen d'une caméra (200), qui représente au moins partiellement une zone (204) au-dessous d'une plate-forme (102) du hayon élévateur (100), lorsque la plate-forme (102) se trouve dans une position de pivotement (108b) dans la zone de vision (202) de la caméra (200), dans lequel, au moyen d'un dispositif d'évaluation (300), un signal (20) est fourni (704) en fonction de l'image (10) acquise, qui caractérise une présence d'au moins une partie d'un objet (304a - 304d), en particulier d'une personne (304a), dans une zone de danger (302), et dans lequel, au moyen d'un dispositif de commande (400), en fonction du signal (20), un mouvement de la plate-forme (102) est arrêté ou est empêché (706) par un signal de commande (30),
dans lequel, au moyen du dispositif de commande (400), par une commande utilisateur automatisée, le mouvement de la plate-forme (102) est poursuivi ou déclenché par le signal de commande (30) lorsque l'au moins un objet (304a - 304d), en particulier la personne (304a), est éloigné de la zone de danger (302).

12. Procédé (700) selon la revendication 11, dans lequel la plate-forme (102) comprend une surface de travail (112), dans lequel une autre image (40) d'une zone de vision (502) de l'autre caméra (500) est acquise (702) au moyen d'une autre caméra (500), qui représente au moins partiellement une zone (504), qui comprend la surface de travail (112) de la plate-forme (102) lorsque la plate-forme (102) se trouve dans la position de pivotement (108b) dans la zone de vision (502) de l'autre caméra (500), et/ou dans lequel, au moyen du dispositif d'évaluation (300), la surface de travail (112) de la plate-forme (102) est éliminée de la zone de danger (302) par masque.

13. Procédé (700) selon la revendication 12, dans lequel la zone de vision (202) de la caméra (200) et la zone de vision (502) de l'autre caméra (500) se chevauchent au moins partiellement et le signal (20) est fourni (704) au moyen du dispositif d'évaluation (300) en fonction de l'image (10) acquise et de l'autre l'autre image (40) acquise, qui caractérise la présence de l'objet (304a - 304d), en particulier de la personne (304a), dans la zone de danger (302), et qu'au moyen du dispositif de commande (400), en fonction du signal (20), le mouvement de la plate-forme (102) est arrêté ou empêché (706) par le signal de commande (30).

14. Procédé (700) selon l'une quelconque des revendications 11 à 13, dans lequel une commande utilisateur manuelle (402) d'un utilisateur est identifiée au moyen du dispositif de commande (300) et, en fonction du signal (20) et de la commande utilisateur manuelle (402), le mouvement de la plate-forme (102) est poursuivi ou est déclenché par le signal de commande (30).

15. Procédé (700) selon l'une quelconque des revendications 11 à 14, dans lequel une commande utilisateur manuelle (404) d'un utilisateur est identifiée au moyen du dispositif de commande (400) et, en fonction de la commande utilisateur manuelle (404), le mouvement de la plate-forme (102) est poursuivi ou est déclenché par le signal de commande (30) lorsque l'au moins un objet (304a - 304d), en particulier la personne (304a), est présent dans la zone de danger (302).

16. Procédé (700) selon l'une quelconque des revendications 11 à 15, dans lequel, au moyen du dispositif d'évaluation (300), en fonction de la première image (10) acquise et/ou de l'autre image (40) acquise, un signal d'avertissement est fourni, qui caractérise une présence de l'objet (304a - 304d), en particulier de la personne (304a), dans une zone d'avertissement (306).

17. Procédé (700) selon la revendication 16, dans lequel la zone d'avertissement (306) est adjacente à la zone de danger (302).

18. Procédé (700) selon l'une quelconque des revendications 11 à 17, dans lequel une extension de la zone de danger (302) est adaptée à une position de pivotement (108a - 108c) de la plate-forme (102) au moyen du dispositif d'évaluation (300).

19. Véhicule automobile (1000), en particulier véhicule utilitaire, qui comprend un hayon élévateur (100, 100a) selon au moins l'une des revendications 1 à 10.

20. Dispositif d'attelage (800), en particulier remorque pour un véhicule automobile (1000), qui comprend un hayon élévateur (100, 100b) selon l'une quelconque des revendications 1 à 10.
